# EUROPEAN PATENT APPLICATION

(11) **EP 1 732 067 A1**
(43) Date of publication of application: **13.12.2006**
(21) Application number: 05721210.2
(22) Date of filing: 15.03.2005
(51) Int. Cl.: G11B 7/0065, G11B 7/135, G11B 7/24, G03H 1/02, G03H 1/26

(54) **HOLOGRAM RECORD CARRIER, HOLOGRAM APPARATUS AND RECORDING METHOD**

(30) Priority: 30.03.2004 JP 2004098240
(71) Applicant: Pioneer Corporation, Tokyo 153-8654 (JP)
(72) Inventor: OGASAWARA, M., Corporate R&D Lab., Pioneer Corp., Tsurugashima-shi, Saitama 3502 (JP)
(74) Representative: Manitz, Finsterwald & Partner GbR
(86) International application number: PCT/JP2005/005060
(87) International publication number: WO 2005/098829

(57) **Abstract**

A holographic record carrier is a holographic record carrier in or from which information is recorded or reproduced by irradiation of light, comprising: a holographic recording layer for storing a light interference pattern based on components of coherent reference light and signal light as a diffraction grating in the inside thereof; and a reflective function layer laminated on a side opposite to the light incidence side of the holographic recording layer, the reflective function layer being sensitive to the intensity of irradiated light so that a non-reflective region appears in an irradiated portion thereof.

## Description

### TECHNICAL FIELD

The present invention relates to a record carrier such as an optical disk or card or the like with which information is optically recorded or reproduced, and more particularly, to a holographic record carrier which has a recording layer irradiated with an optical beam for recording information thereon or reproducing information therefrom, and a hologram apparatus and a hologram recording method therefor.

### BACKGROUND ART

A hologram has drawn attention because of its ability to record two-dimensional data at a high density, for use in high density information recording. The hologram is characterized by volumetrically recording a wave front of light, which carries out recording of information on a recording medium made of a photosensitive material such as a photo-refractive material as changes in refractive index as a refraction grating. Multiplex recording on the holographic record carrier can dramatically increase the recording capacity. There are included angle multiplexing, phase coding multiplexing and the like in the multiplex recording in which information can be recorded multiple times by changing the incident angle or phase of interfering light waves even in a multiplexed hologram region. For example, a recording and reproducing system which utilizes the holographic record carrier as a disk has been developed (see Laid-open Japanese Patent Application Kokai No. 11-311937).

In the developed holographic recording system, reference light is converged on the reflective film through the recording layer as a spot, and the reference light reflected by the reflective film diverges to pass through the recording layer again, and simultaneously, information light, which carries information to be recorded, is passed through the recording layer at the same area. In this way, in the recording layer, the reflected reference light interferes with the information light to form an interference pattern to volumetrically record hologram as a refraction grating within the recording layer. The holograms of the interference pattern are recorded in the recording layer adjacent to each other, overlapping in sequence. Then, the reference light is irradiated to detect and demodulate reproduced light restored from each hologram to reproduce recorded information.

In the case that the reference light and information light coaxially impinge from the same side of the recording layer, it is difficult to separate the reference light reflected on the reflective film from the reproduced light from the holograms during reproduction of information. This causes the performance of reading a reproduced signal to be degraded.

To solve these problems, the holographic recording system shown in Laid-open Japanese Patent Application No. 11-311937 is provide with an objective lens immediately preceded by a bisect azimuth rotator which is a rotator having a pupil divided into two areas, which have respective optical rotating directions different by 90° from each other to prevent the reference light from impinging on a photodetector.

### DISCLOSURE OF THE INVENTION

However, the conventional method involves a problem that the bisect azimuth rotator and the objective lens must be integrally driven. The conventional method also has a problem of a deteriorated recording characteristic from reproduced light corresponding to the vicinity of the division boundary of the bisect azimuth rotator.

In the case that a hologram is recorded in such a holographic record carrier of reflective type, four kinds of hologram are recorded by interference due to four light beams of entering reference light and signal light and reflected reference light and signal light, thereby wastefully using holographic recording layer performance.

Further, when reproducing information, it is difficult to separate diffracted light caused by a reproduced hologram from reflected reference light, because the reference light is reflected from the reflective film of the holographic record carrier. Accordingly, readout performance of the reproduced signal is deteriorated. Further, since a reflected hologram image is recorded, the reproduced signal is deteriorated.

It is therefore an exemplary object of the present invention to provide a holographic record carrier, a recording/reproducing and hologram device capable of providing recording and reproduction stability.

Thus, as for a problem to be solved by the present invention, it is given as an example to provide a holographic record carrier which is capable of stably carrying out recording or reproduction, a method of recording or reproducing a hologram and a hologram apparatus.

According to the present invention, there is provided a holographic record carrier in or from which information is recorded or reproduced by irradiation of a light, comprising:
a holographic recording layer for storing a light interference pattern based on components of coherent reference light and signal light as a diffraction grating in the inside thereof; and
a reflective function layer laminated on a side opposite to the light incidence side of the holographic recording layer, the reflective function layer being sensitive to the intensity of irradiated light so that a non-reflective region appears in the irradiated portion thereof.

According to the present invention, there is provided a hologram apparatus for recording therein information as a diffraction grating, comprising:
a supporting portion for detachably holding a holographic record carrier comprising a holographic recording layer for storing a light interference pattern based on components of coherent reference light and signal light as a diffraction grating in the inside thereof, and a reflective function layer laminated on a side opposite to the light incidence side of the holographic recording layer, the reflective function layer being sensitive to the intensity of irradiated light so that a non-reflective region appears in an irradiated portion thereof;
an interference portion containing an objective lens for irradiating a light beam to the holographic recording layer so that the light beam passes through the reflective function layer from the holographic recording layer, thereby forming a diffraction grating based on a light interference pattern in a portion, in the holographic recording layer, where components of reference light and signal light of the light beam interfere with each other; and
a non-reflective region forming portion for forming a non-reflective region in the reflective function layer, before formation of the light interference pattern, by condensing the light beam on the reflective function layer through the objective lens in advance.

According to the present invention, there is provided a hologram recording method of recording information in a holographic record carrier comprising a holographic recording layer for storing a light interference pattern based on components of coherent reference light and signal light as a diffraction grating in the inside thereof, and a reflective function layer laminated on a side opposite to the light incidence side of the holographic recording layer, the reflective function layer being sensitive to the intensity of irradiated light so that a non-reflective region appears in an irradiated portion thereof, the method comprising:
an interference step of forming a diffraction grating based on a light interference pattern in a portion of the holographic recording layer where components of reference light and signal light of the light beam interfere with each other, by irradiating a light beam to the holographic recording layer so that the light beam passes from the holographic recording layer through the reflective function layer; and
a step of forming the non-reflective region in the reflective function layer, before the interference step, by condensing the light beam on the reflective function layer through the objective lens in advance.

### BRIEF DESCRIPTION OF THE DRAWINGS

Fig. 1 is a schematic partial sectional view showing a holographic record carrier of an embodiment according to the present invention.
Fig. 2 is a schematic partial perspective view showing the holographic record carrier of the embodiment according to the present invention.
Fig. 3 is plan views and graphs explaining states before and after irradiation of a servo beam on a reflective function layer of a holographic record carrier of the embodiment according to the present invention.
Fig. 4 is a block diagram showing a schematic configuration of a hologram apparatus for recording or reproducing information in or from a holographic record carrier of the embodiment according to the present invention.
Fig. 5 is a schematic perspective view showing a schematic construction of a pickup of the hologram apparatus for recording or reproducing information in or from a holographic record carrier of the embodiment according to the present invention.
Fig. 6 is a schematic view showing a schematic construction of the pickup of the hologram apparatus for recording or reproducing information in or from the holographic record carrier of the embodiment according to the present invention.
Fig. 7 is a schematic perspective view showing a schematic construction of a three-axis actuator for an objective lens in the pickup of the hologram apparatus for recording or reproducing information in or from the holographic record carrier of the embodiment according to the present invention.
Figs. 8 and 9 are structural views each showing a schematic construction of the pickup of the hologram apparatus for recording or reproducing information in or from the holographic record carrier of the embodiment according to the present invention.
Fig. 10 is a plan view showing a part of a photo detector in the pickup of the hologram apparatus for recording or reproducing information in or from the holographic record carrier of the embodiment according to the present invention.
Figs. 11 to 13 are schematic partial cross sectional views each illustrating a reconstructing process for the hologram recording medium of the embodiment according to the present invention.
Fig. 14 is a structural view showing a hologram apparatus of another embodiment according to the present invention.
Figs. 15 to 20 are plan views each showing a track structure of a holographic record carrier of another embodiment according to the present invention.
Fig. 21 is a perspective view showing the holographic record carrier of another embodiment according to the present invention.
Fig. 22 is a perspective view showing a hologram optical card of another embodiment according to the present invention.

### DETAILED DESCRIPTION OF THE INVENTION

In the following, embodiments of the present invention will be described with reference to the drawings.

### <holographic record carrier>

In a holographic recording/reproducing apparatus, holographic recording is performed by using a first light beam causing a reference light and a signal light interfering with each other, and at the same time using a servo beam of laser light with a different wavelength from the first light beam to carry out a servo control (focusing and tracking) on relative positioning of a holographic record carrier and a pickup device particularly an object lens thereof. The following description is an example of such device.

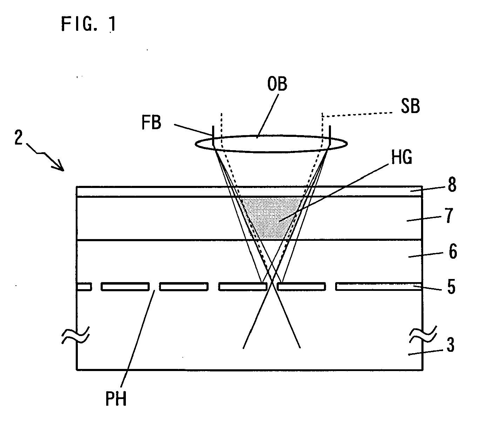

Fig. 1 shows a holographic record carrier 2 of disk-shaped, an exemplary embodiment of the present invention, on which information recording or reproduction is preformed with light irradiation.

The holographic record carrier 2 comprises a substrate 3 with transferred tracks, a reflective function layer 5, a separation layer 6, a holographic recording layer 7, and a protective layer 8 which are laminated on the substrate 3 from an opposite side to a side from which reference light impinges.

The holographic recording layer 7 stores an optical interference pattern as a refraction grating (hologram) produced by components of the coherent reference light and signal light included in the first light beam FB. The first light beam FB including the components of the reference light and signal light to record the hologram is used when information recording. On the other hand during information reproduction the first light beam FB consisting of the reference light component alone is used. Further, in the case of phase encoding multiple reproducing, the first light beam FB includes a phase modulation pattern and a reference light component, although it does not include the signal light component.

The reflective function layer 5 is made of a second photosensitive material which is sensitive to the intensity of a servo beam SB (second light beam) having a wavelength different from that of the first light beam FB so that its physical properties irreversibly change. As the second photosensitive material, for example, a phase-change film or a pigment film can be used. In the reflective function layer 5, the sensitivity to the wavelength of the servo beam SB is set to be higher than that to the wavelength of the first light beam FB. Positioning (focus servo, x- and y-direction servo) on the holographic record carrier 2 for performing the hologram recording is carried out by using the servo beam SB.

A photosensitive material which changes to exert transparency when light in a specific wavelength to which it is sensitive is condensed with a certain magnitude thereon, is preferably used for the reflective function layer 5. The reflective function layer 5 is further set so as to reflect the first light beam FB having the wavelength with which the hologram recording is performed.

In addition, the holographic recording layer 7 has a sensitivity, to the wavelength of the first light beam FB, which is higher than that to the wavelength of the servo beam SB. A photo refractive material, a hole burning material, a photochromic material or the like is used as the first photosensitive material constituting the holographic recording layer 7 for storing a light interference pattern so that information can be recorded or reproduced based on the interference pattern of light passing through the holographic recording layer 7.

The substrate 3 is made may be, for example, glass, polycarbonate, amorphous polyolefin, polyimide, plastics such as PET, PEN, PES, ultraviolet curing acrylic resin, and the like. The substrate 3 has a plurality of tracks T formed on the main surface in the form of grooves that extend spaced away from each other without intersection. The reflective function layer 5 functions as a guiding layer. The separation layer 6 and protective layer 8 are made of an optically transparent material, and function to planarize the laminate and protect the holographic recording layer and the like.

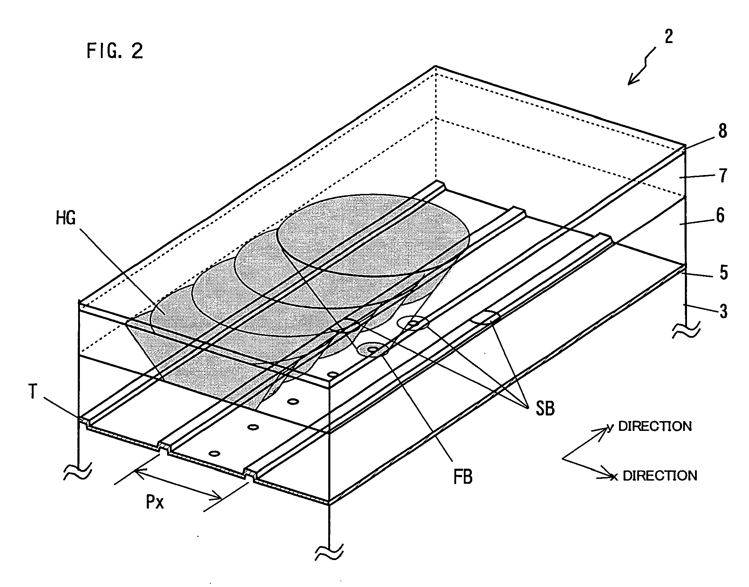

As shown in Fig. 2, prior to the hologram recording, pinholes PH which transmit a zero-order light component of the first light beam FB are bored in the reflective function layer 5.

The servo beams SB are condensed in order to read out the tracks or pits for servo which are formed on the substrate 3. In the case where the reflective function layer 5 is made of a material showing a fading property (a material showing penetrability) when the servo beam SB is condensed at a predetermined intensity, the pinhole PH corresponding to a spot size can be bored in the reflective function layer 5. The pinhole PH must have a property of transmitting a reference light component (zero-order light) of the first light beam FB.

As shown in Fig. 2, the servo beam SB is split into three beams by diffractive optics such as a grating. The xy servo is performed by using two side beams, and the recording is performed by using a main beam. That is to say, an optical axis of the first light beam FB is disposed so that the first light beam FB is located at the center of the light spots of the three servo beams SB lining up on a straight line. The tracking servo control is performed, and the hologram recording is carried out in the holographic recording layer 7 above a mirror portion between the adjacent tracks.

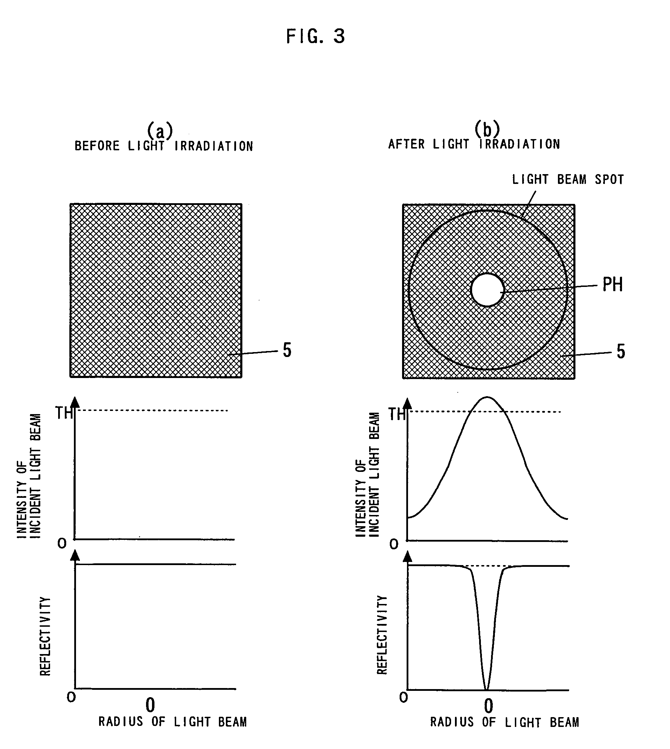

The operations of a photosensitive material having a characteristic value showing a lower reflectivity at the time of irradiation of the servo beam SB than that at the time of non-irradiation thereof (a characteristic value showing a higher reflectivity at the time of non-irradiation than that at the time of non-irradiation) is shown in Fig. 3(a) and Fig. 3(b).

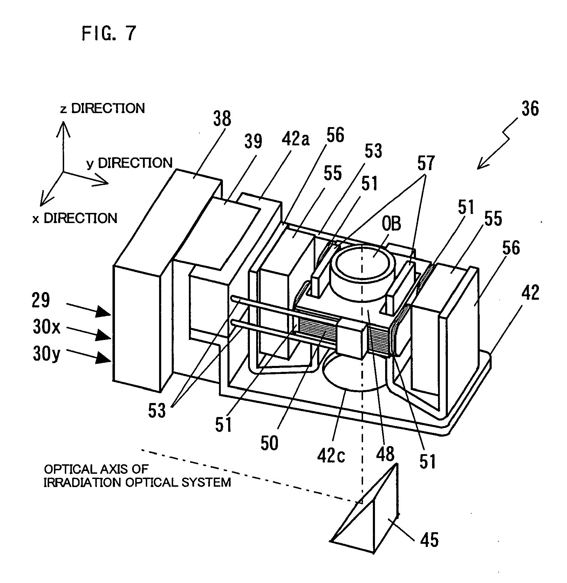

Before the irradiation of the servo beam SB (Fig. 7(a)), the reflective function layer has a uniform high reflectivity. The reflectivity decreases (or a transmittance increases) in a portion (non-reflective region) to which light having a greater intensity than a predetermined threshold value TH (a value with which such a reflectivity as to block the reflection of the first light beam FB (or such a transmittance as to transmit the first light beam FB) appears) is irradiated (Fig. 7(b)) at the central portion and the vicinity of servo beam SB due to the irradiation of the servo beam SB.

In this embodiment, a photosensitive material having a high characteristic value showing a higher reflectivity at the time of non-irradiation than that at the time of irradiation (or a value showing a lower transmittance at the time of non-irradiation than that at the time of irradiation) is used for the reflective function layer 5. That is to say, the non-reflective region has, as a characteristic value, a higher transmittance than that at the time of non-irradiation of light, or has, as a characteristic value, a lower reflectivity as a characteristic value than that at the time of non-irradiation of light. In addition, it is obvious that a photosensitive material having a reflectivity can also be used whose absorptance at the time of irradiation increases as compared with that at the time of non-irradiation which affects the reflectivity at the time of non-irradiation. In this case, since the non-reflective region has an absorptance as a higher characteristic value than that at the time of non-irradiation of light, return light of the first light beam FB can be prevented as in other cases.

In the manner as described above, in this embodiment, the reflective function layer 5 which is set to be highly sensitive to the wavelength of the servo beam SB is disposed on the substrate 3. The non-reflective region, such as a pinhole PH, which passes the components of reference light for hologram recording or reproduction using a servo beam SB to the rear face side of the holographic record carrier 2 (so that the components do not return back to the objective lens side) is formed in the reflective function layer 5.

Note that, tracks T on the substrate are provided at least for performing the servo control for the tracking servo. A hologram HG is voluminally recorded in the holographic recording layer 7 above the space between the tracks T. When the substrate 3 is a disc, in order to perform tracking servo control, tracks T may be formed in a spiral shape or in a concentric shape or in the shape of a plurality of divided spiral arc parts on the substrate with respect to the center of the substrate.

The light interference pattern based on the first light beam is voluminally stored as a hologram HG (diffraction grating) in the inside of the holographic recording layer. The pinholes PH as non-reflective regions are formed in the reflective function layer laminated on the holographic recording layer in a film thickness direction by using the servo beam SB which is irradiated such that its optical axis approximately agrees with the optical axis of the first light beam.

The servo control is performed by driving an objective lens according to a detected signal by means of an actuator by using a pickup provided with an optical system or the like comprising a light source for emitting a light beam, and an objective lens for condensing the light beam as a light spot on the track on the reflective function layer 5 and guiding the reflected light to a photo detector. The diameter of the light spot on the reflective function layer 5 is set so as to be narrowed down to a value which is determined by the light beam wavelength and the numerical aperture NA (what is called diffraction limit, for example, 0.82 λ/NA (λ = wavelength) is determined only by the wavelength of a light beam and the numeral aperture (NA) when the aberration is smaller enough compared with the wavelength). That is to say, the light beam irradiated from the objective lens is used so as to focus when the reflective function layer 5 is located in the position of a beam waist. The width of a groove is suitably set depending on the output of the photo detector for receiving reflected light from the optical spot, for example, a push-pull signal.

A pitch Px (in the x-direction, that is, a direction perpendicular to the extension direction (y-direction) of the track T) of the track T of the reflective function layer 5 shown in Fig. 2 is defined as a predetermined distance determined by the degree of multiplicity of the hologram HG recorded above the spots of the first light beam FB. The maximum multiplicity in an actual shift multiplex recording hologram system, that is, a value (the number of times) indicating how many independent holograms can be recorded in the same volume in the recording medium at maximum is determined by the recording medium and the structure of the apparatus as described above. A minimum track pitch Px (that is, a minimum shift distance) is set based on a value which is obtained by dividing the diameter of the hologram region for recording by the maximum multiplicity. The track pitch Px is defined to be equal or greater than the minimum shift distance.

Note that, although in the above-mentioned embodiment, a holographic record carrier having a structure in which a holographic recording layer is laminated on a reflective function layer 5 through a separation layer has been shown, the separation layer may be omitted. In addition, the substrate 3 may be disposed between the holographic recording layer 7 and the reflective function layer 5 such that the reflective function layer 5 is laminated on the side opposite to the side of the substrate 3 on which the holographic recording layer 7 is laminated so that the substrate functions as a separation layer.

### <Hologram Apparatus>

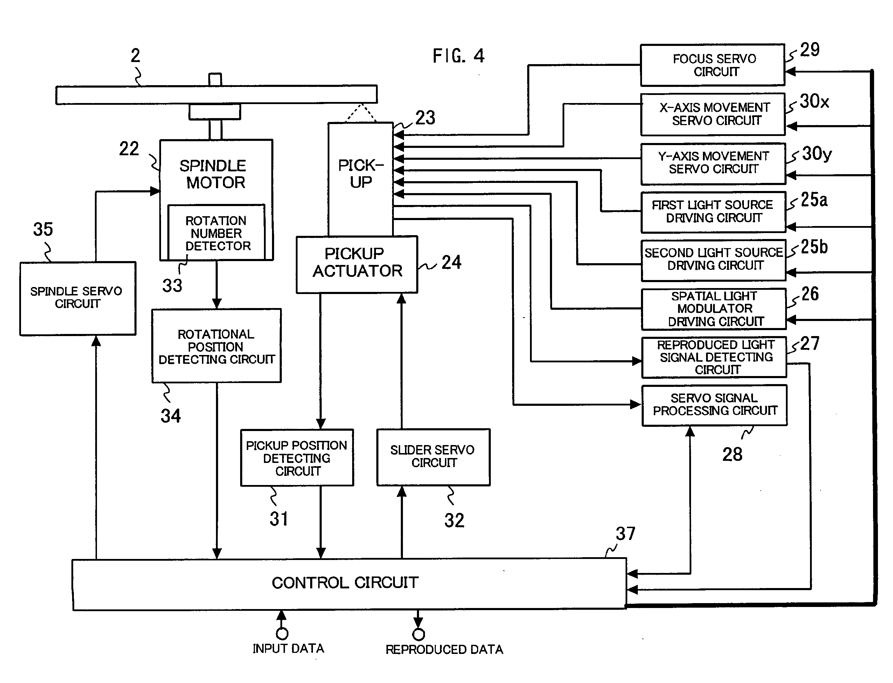

Fig. 4 generally shows an exemplary configuration of a recording/reproducing apparatus for recording or reproducing information to or from a holographic record carrier to which the present invention is applied.

The holographic recording/reproducing apparatus of Fig. 4 comprises a spindle motor 22 for rotating a disk 2, which is a holographic record carrier, through a turn table; a pickup device 23 for reading a signal from the holographic record carrier 2 with a light beam; a pickup actuator 24 for holding and moving the pickup in a radial direction (x-direction); a first laser source driving circuit 25a; a second laser source driving circuit 25b; a spatial light modulator driving circuit 26; a reproduced signal processing circuit 27; a servo signal processing circuit 28; a focusing servo circuit 29; an x-direction movement servo circuit 30x; a y-direction movement servo circuit 30y; a pickup position detecting circuit 31 connected to the pickup actuator 24 for detecting a pickup position signal; a slider servo circuit 32 connected to the pickup actuator 24 for supplying a predetermined signal to the pickup actuator 24; a rotation encoder 33 connected to the spindle motor 22 for detecting a rotational speed signal of the spindle motor; a rotation detector 34 connected to the rotation encoder 33 for generating a rotating position signal of the holographic record carrier 2; and a spindle servo circuit 35 connected to the spindle motor 22 for supplying a predetermined signal to the spindle motor 22.

The holographic recording/reproducing apparatus comprises a controller circuit 37 which is connected to first laser source driving circuit 25a, second laser source driving circuit 25b, spatial light modulator driving circuit 26, reproduced signal processing circuit 27, servo signal processing circuit 28, focusing servo circuit 29, x-direction movement servo circuit 30x, y-direction movement servo circuit 30y, pickup position detecting circuit 31, slider servo circuit 32, rotation encoder 33, a rotation detector 34, and spindle servo circuit 35. The controller circuit 37 conducts a focusing servo control, an x-and y-direction movement servo control, a reproduced position (position in the x- and y-direction) control, and the like related to the pickup through the foregoing circuits connected thereto based on signals from these circuits. The controller circuit 37, which is based on a microcomputer that is equipped with a variety of memories for controlling the overall apparatus, generates a variety of control signals in accordance with manipulation inputs from the user from an operation unit (not shown) and a current operating condition of the apparatus, and is connected to a display unit (not shown) for displaying an operating situation and the like for the user. The controller circuit 37 is also responsible for processing such as encoding of data to be recorded, input from the outside, and the like, and supplies a predetermined signal to the spatial light modulator driving circuit 26 for controlling the recording sequence. Furthermore, the controller circuit 37 performs demodulation and error correction processing based on signals from the reproduced signal processing circuit 27 to restore data recorded on the holographic record carrier. In addition, the controller circuit 37 decodes restored data to reproduce information data which is output as reproduced information data.

Furthermore, the controller circuit 37 performs control to form non-reflective regions at predetermined intervals so that holograms to be recorded can be recorded at predetermined intervals (at multiplex intervals).

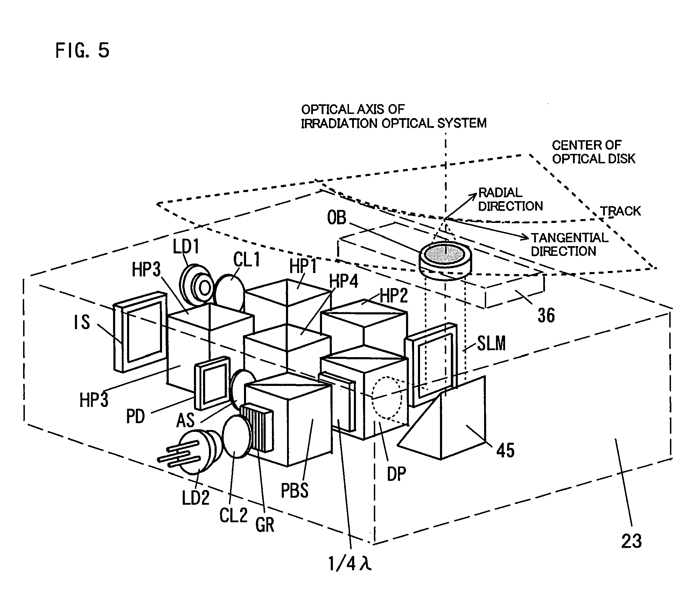

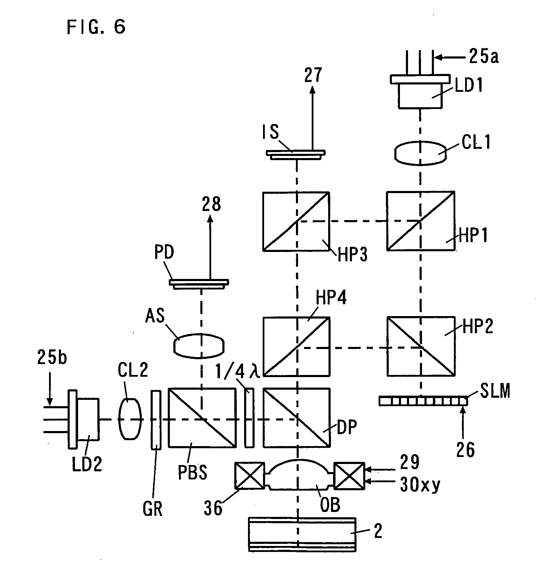

Figs. 5 and 6 show a schematic configuration of the pickup of the hologram apparatus concerned.

The pickup device 23 generally comprises a recording/reproducing optical system, a servo system, and a common system thereto. These systems are placed substantially on the common plane except for the objective lens OB.

The hologram recording/reproducing optical system comprises a first laser source LD1 for recording and reproducing holograms, a first collimator lens CL1, a first half mirror prism HP1, a second half mirror prism HP2, a polarizing spatial light modulator SLM, a reproduced signal detector including an image sensor IS comprised of an array such as a CCD, a complimentary metal oxide semiconductor device, or the like, a third half mirror prism HP3, and a fourth half mirror prism HP4.

The servo system comprises an objective lens actuator 36 for servo-controlling (movements in the x-, y-, z-directions) of the position of a light beam with respect to the holographic record carrier 2, a second laser source LD2, a second collimator lens CL2, a diffraction optical element GR such as a grating or the like for generating a multi-beam for a servo light beam, a polarization beam splitter PBS, a quarter wavelength plate 1/4 λ, a coupling lens AS, and a servo signal detector including a photodetector PD. In addition, the servo system is also used to bore a pinhole PH corresponding to the spot size in the reflective function layer 5.

The common system comprises a dichroic prism DP and the objective lens OB.

As shown in Figs. 5 and 6, half mirror surfaces of the first, third and fourth half mirror prisms HP1, HP3, and HP4 are disposed to be parallel with one another. In a normal direction of these half mirror planes, the half mirror plane and the separation planes of the second half mirror prism HP2 and the dichroic prism DP and polarization beam splitter PBS are in parallel with one another. These optical parts are disposed such that the optical axes (one-dot chain lines) of light beams from the first and second laser sources LD1 and LD2 extend to the recording and reproducing optical system and servo system, respectively, and substantially coincide with one another in the common system.

The first laser source LD1 is connected to the first laser source driving circuit 25a and its output is adjusted by the circuit so that the intensity of the emitted first light beam FB is enhanced at the time of hologram recording, and is weakened at the time of hologram reconstruction.

The second laser source LD2 is connected to the second laser source driving circuit 25b, and its output is adjusted by the circuit so that the intensity of the servo beam SB having a wavelength different from that of the light beam emitted from the first laser source is enhanced at the time of formation of the non-reflective regions, and is weakened at the time of reproduction.

The polarizing spatial light modulator SLM of reflection type has a function of electrically transmitting or blocking a part or all of incident light with a liquid crystal panel or the like having a plurality of pixel electrodes that are divided in a matrix shape or the like. The polarizing spatial light modulator SLM, which is connected to the first laser source driving circuit 25a, modulates and reflects an light beam so as to have a polarization component distribution based on page data to be recorded (two-dimensional data of information pattern such as bright and dark dot pattern or the like on a plane) from the spatial light modulator driving circuit 26 to generate signal light. Further, instead of the polarizing spatial light modulator SLM, in case that a transparent liquid crystal panel having a plurality of pixel electrodes divided into a matrix is used as the spatial light modulator, the modulator is arranged between the first and second half mirror prisms HP1 and HP2.

The reproduced signal detector including the image sensor IS is connected to the reproduced signal processing circuit 27.

Further, the pickup device 23 is provided with the objective lens actuator 36 for moving the objective lens OB in the optical axis (z direction) parallel direction, and in a track (y direction) parallel direction, and in a radial (x direction) direction perpendicular to the track.

The photodetector PD is connected to the servo signal processing circuit 28, and has the shape of light receiving element divided for focusing servo and x and y direction movement servo generally used for optical disks. The servo scheme is not limited to an astigmatism method, but can employ a push-pull method. The output signal of the photodetector PD, such as a focus error signal and a tracking error signal etc. is supplied to the servo signal processing circuit 28.

In the servo signal processing circuit 28, a focusing driving signal is generated from the focus error signal, and is supplied to the focusing servo circuit 29 through the controller circuit 37. The focusing servo circuit 29 drives the focusing section of the objective lens actuator 36 mounted in the pickup device 23, so that the focusing section operates to adjust the focus position of an optical spot irradiated to the holographic record carrier.

Further, in the servo signal processing circuit 28, x and y direction movement driving signals are generated from x and y direction movement error signals, and supplied to the x-direction movement servo circuit 30x and y-direction movement servo circuit 30y, respectively. Thus the x-direction movement servo circuit 20x and the y-direction movement servo circuit 30y drive the objective lens actuator 36 mounted on the pickup 23 according to the x- and y-direction movement driving signals. Therefore, the objective lens is driven by the amount of driving current according to the driving signal along the x, y and z axes, and then the position of the focal point incident on the holographic record carrier is displaced. Accordingly, it is possible to fix a relative position of the focal point with respect to a moving holographic record carrier and then to guarantee time to form the hologram when recording data.

The controller circuit 37 generates a slider driving signal based on a position signal from the operation panel or the pickup position detecting circuit 31 and the x direction movement (tracking) error signal from the servo signal processing circuit 28, and supplies the slider driving signal to the slider servo circuit 32. The slider servo circuit 32 moves the pickup device 23 in the radial direction of the disk in response to a driving current carried with the slider driving signal by the pickup actuator 24.

The rotation encoder 33 detects a frequency signal indicative of a current rotating frequency of the spindle motor 22 for rotating the holographic record carrier 2 through the turn table, generates a rotational speed signal indicative of the spindle rotational signal corresponding thereto, and supplies the rotational speed signal to the rotation detector 34. The rotation detector 34 generates a rotational speed position signal which is supplied to the controller circuit 37. The controller circuit 37 generates a spindle driving signal which is supplied to the spindle servo circuit 35 to control the spindle motor 22 for driving the holographic record carrier 2 to rotate.

Fig. 7 shows the objective lens actuator 36 of the pickup for the holographic recording/reproducing apparatus of this embodiment.

The objective lens actuator 36 comprises an actuator base 42 which can swing in the y-direction by a piezo element 39 which is coupled to a support 38 secured to a pickup body (not shown). Within the pickup body, there are the aforementioned optical parts required for making up the pickup such as the prism 45 for reflecting a light beam from the laser at right angles for leading the light beam to the objective lens OB, and the like. The light beam passes through an opening 42c and the objective lens OB, and is converged to spot light which is irradiated to an information recording surface of the medium on the turn table.

As shown in Fig. 7, the objective lens OB is mounted on a protrusion at an upper end of a lens holder 48 which is formed in a cylindrical shape, and makes up a movable optical system together with the objective lens. A focusing coil 50 is wound around the outer periphery of the lens holder 48 such that the central axis of the coil is in parallel with the optical axis of the objective lens OB. Four tracking coils 51, for example, are disposed outside of the focusing coil 50 such that the central axes of the coils are perpendicular to the optical axis of the objective lens OB. Each tracking coil 51 is previously wound in a ring shape, and adhered on the focusing coil 50. The movable optical system made up of the objective lens OB and lens holder 48 is supported at one end of two pairs, i.e., a total of four longitudinal supporting members 53 which are spaced apart from each other in the optical axis direction of the objective lens OB and extend in the y-direction perpendicular to the optical axis direction. However, Fig. 7 shows only three of the supporting member 53. Each supporting member 53 is cantilevered at a distal end of an extension 42a secured to the actuator base 42. Each supporting member 53 is made of a coil material or the like, and therefore has a resiliency. The movable optical system made up of the objective lens OB and lens holder 48 is movable in the x-, y-, and z-directions by the four longitudinal supporting members 53 and aforementioned piezo element 39.

The lens holder 48 is spaced apart from and sandwiched between a pair of magnetic circuits. Each magnetic circuit comprises a magnet 55 facing the lens holder 48, and a metal plate 56 for supporting the magnet 55, and is secured on the actuator base 42. The lens holder 48 is formed with a pair of throughholes which are positioned to sandwich the objective lens OB in parallel with the optical axis of the objective lens OB and the central axis of the coil inside the focusing coil 50 of the lens holder 48 in a direction in which the longitudinal supporting members 53 extend. A yoke 57, which extends from the metal plate 56 of the magnetic circuit, is inserted into each throughhole without a contact therebetween. The focusing coil 50 and tracking coil 51 are positioned within a magnetic gap of the magnetic circuit which is made up of the magnet 55 and yoke 57.

The focusing coil 50, tracking coil 51, and piezo element 39 are controlled by the focusing servo circuit 29, x-direction movement servo circuit 30x, and y-direction movement servo circuit 30y, respectively. Since parallel magnetic flux crossing perpendicularly to the respective coils can be generated in the magnetic gap, driving forces in the x- and z-directions can be generated by supplying predetermined currents to the respective coils to drive the aforementioned movable optical system in the respective directions.

In this way, voice coil motors are used to drive the objective lens OB in the x- and y-directions, and the objective lens OB is driven for the y-direction together with the actuator base using a piezo element or the like. Other than the foregoing structure, the actuator may use voice coil motors for all the axes.

### <Method of Recording and Reproducing Hologram>

Description will be made on a recording and reproducing method for recording or reproducing information by irradiating a holographic record carrier with an light beam using the holographic recording and reproducing apparatus described above.

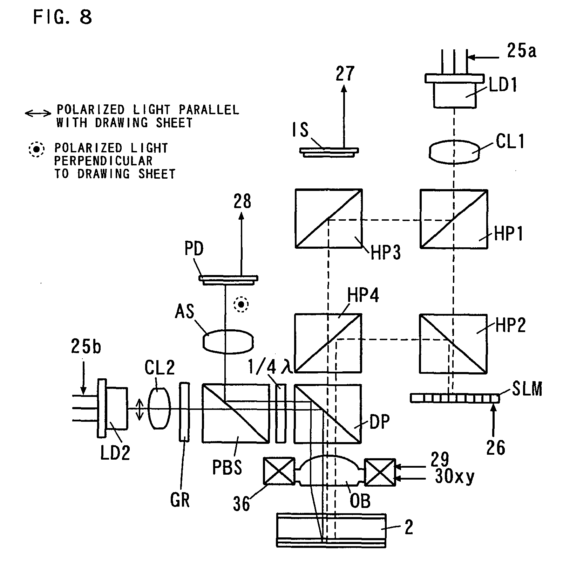

During recording, as shown in Fig. 8, coherent light having a predetermined intensity from the first laser source LD1 is separated into a reference beam and a signal beam by the first half mirror HP1 (both the beams are indicated by broken lines and are shifted from the optical axis of Fig. 6 for explaining the optical path).

The signal beam transmits the second half mirror prism HP2, and impinges on the polarizing spatial light modulator SLM along the normal of the reflective surface. The signal light modulated in a predetermined manner by and reflected from the polarizing spatial light modulator SLM again impinges on the second half mirror prism HP2 and directs to the fourth half mirror prism HP4.

The reference beam is reflected by the third half mirror prism HP3, and directs to the fourth half mirror prism HP4.

The reference light and the signal light are combined so as to be substantially coaxial by using the fourth half mirror prism HP4. The two combined light beams pass through the dichroic prism DP, and are converged on the holographic record carrier 2 by the objective lens OB for recording a hologram.

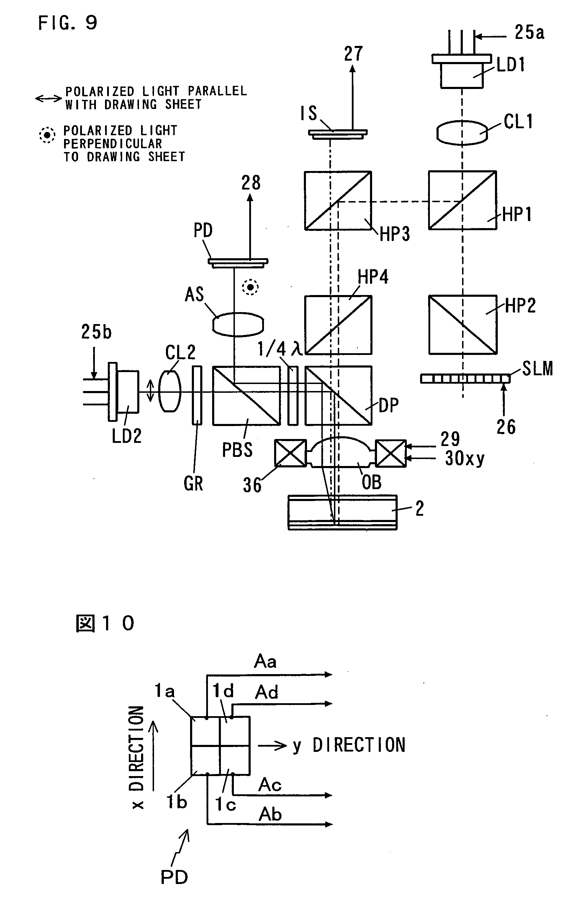

During information reproduction, on the other hand, light is separated into a reference beam and a signal beam by the first half mirror HP1, in a manner similar to the recording, as shown in Fig. 9, however, holograms are reproduced only with the reference beam. By bringing the polarizing spatial light modulator SLM into a non-reflective state (light-permissible state), only reference light from the third half mirror HP3 passes through the dichroic prism DP and objective lens OB, and impinges on the holographic record carrier 2.

Since reproduced light (two-dot chain line) generated from the holographic record carrier 2 transmits the objective lens OB, dichroic prism DP, fourth half mirror prism HP4, and third half mirror prism HP3, and impinges on the image sensor IS. The image sensor IS delivers an output corresponding to an image formed by the reproduced light to the reproduced signal processing circuit 27 which generates a reproduced signal that is supplied to the controller circuit 50 for reproducing recorded page data. In addition, an image forming lens may be provided between the third half mirror prism HP3 and the image sensor IS.

Here, a position decision servo control is performed with respect to the holographic record carrier or hologram disk 2 in both recording and reproduction of the hologram. According to the position decision servo control, three axes actuator (objective lens actuator 36) is capable of driving the objective lens along the x, y, and z-directions, by an error signal operated and obtained based the output of the photodetector PD.

During both recording and reproduction, the second laser source LD2 for servo control emits coherent light at a different wavelength from the first laser source LD1, as shown in Figs. 8 and 9. The servo light beam (thin solid line) from the second laser source LD2 is P-polarized light (double-head arrow indicating the parallelism to the drawing sheet) which is led along an optical path for servo detection including the second collimator lens CL2, polarization beam splitter PBS and 1/4 wave plate 1/4λ, but is combined with the signal beam and reference beam by the dichroic prism DP immediately before the objective lens OB. The servo light beam, after reflected by the dichroic prism DP, is converged by the objective lens OB, and impinges on the holographic record carrier 2. Return light of the servo light beam reflected from the holographic record carrier 2 back to the objective lens OB and then transformed by the 1/4 wave plate 1/4λ into S-polarized light (a black circle surrounded by a broken-line circle indicative of being perpendicular to the drawing sheet) which impinges on a light receiving surface of the servo photodetector PD along the normal thereof through the polarization beam splitter PBS and astigmatism element AS.

Further, the z-direction servo (focusing servo) control along the z-direction may be performed by the astigmatic method, three-beam method, spot size method and push/pull method that are used in a conventional light pickup or a combination thereof may be used.

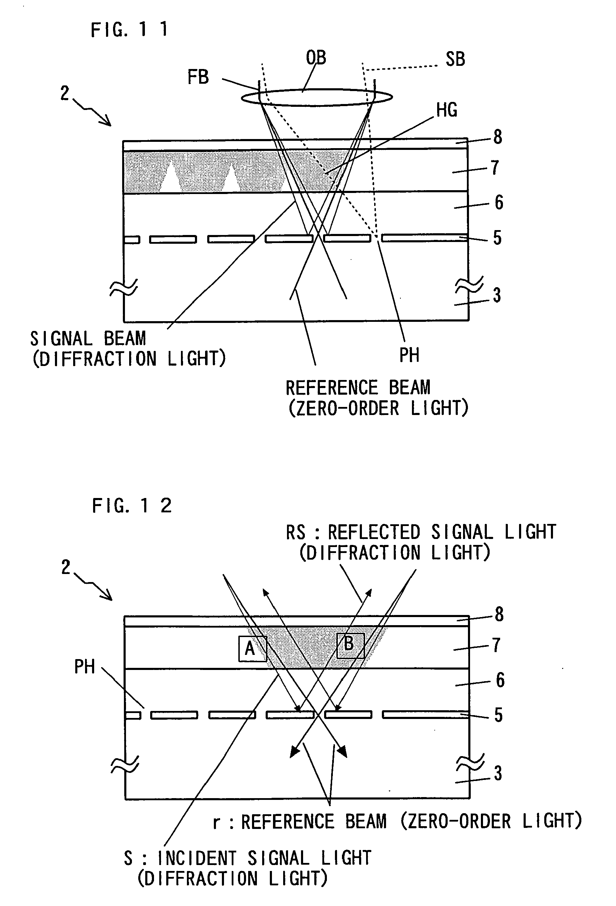

With the astigmatism method, for example, a central portion of the photodetector PD comprises light receiving elements 1a - 1d having a light receiving surface equally divided into four for receiving a beam, for example, as shown in Fig. 10. The directions in which the photodetector PD is divided correspond to the radial direction of the disk and a tangential direction of the guide tracks. The photodetector PD is set such that a focused light spot appears to be a circle centered at the intersection of lines which divide the photodetector PD into the light receiving elements 1a - 1d.

In accordance with output signals of the respective light receiving elements 1a - 1d of the photodetector PD, the servo signal processing circuit 28 generates an RF signal Rf and a focus error signal. When the signals of the light receiving elements 1a - 1d are labeled Aa - Ad, respectively, in this order, the focus error signal FE is calculated by EF = (Aa + Ac) - (Ab + Ad), and the tracking error signal TE is calculated by TE = (Aa + Ad) - (Ab + Ac). These error signals are supplied to the controller circuit 37.

### <Detailed record and reproduction>

In this embodiment, as shown in Fig. 2, the servo beam SB is condensed on the reflective function layer 5 of the holographic record carrier 2, and forms a pinhole PH as a non-reflective region in the reflective function layer 5 through the optical power modulation. That is to say, the servo beam SB is outputted with the optical output required to bore a pinhole PH in the reflective function layer 5. In addition, the positioning servo control with respect to the holographic record carrier 2 is constantly performed by the servo beam SB, and at the same time, the hologram reconstruction is performed by a first light beam FB (reference light), and the hologram recording is performed by a first light beam FB (reference light and signal light).

As shown in Fig. 11, the spot of the servo beam SB is arranged forward of the spot of the first light beam FB with respect to the recording direction of the holographic record carrier 2 on the track of the reflective function layer 5. This arrangement is made by shifting the optical axis of the servo beam SB and the axis of the first light beam FB from each other at the time of incidence on the objective lens OB. In addition, an element for deflecting one of the axes of the beams SB and FB, or both the axes of the beams SB and FB may be inserted.

A hologram is recorded by causing the components of the reference light and the signal light of the first light beam FB to interfere with each other within the holographic recording layer 7. The condensed spot of the first light beam FB is made to agree with the pinhole PH bored by the servo beam SB. Since the modulated signal (the component of the signal light) which is obtained through the modulation in the spatial light modulator SLM is the primary-order or higher diffracted light component, it has a certain spread in the vicinity of the condensed spot (Fourier surface). For this reason, most of the light beams are reflected on the reflective function layer 5. On the other hand, since the reference light (or the component of the zero-order light) is the unmodulated DC light, it has a spot size determined by the number of the apertures of the objective lens OB and the wavelength. Thus, if the bored pinhole PH is larger than the spot size to some degree, the reference light penetrates through the pinhole PH.

As shown in Fig. 12, when the hologram is recorded, since the reference light penetrates through the pinhole PH, an interference between incident reference light r and incident signal light S, and an interference between the incident reference light r and reflected signal light RS are caused within the holographic recording layer 7. As a result, holograms A and B are formed based on the respective interferences. Since the reference light r penetrates the rear face side of the holographic record carrier 2 as it is, no hologram can be formed with the reflected reference light. In this manner, a hologram is formed above the pinhole PH provided as the non-reflective region in the reflective function layer 5.

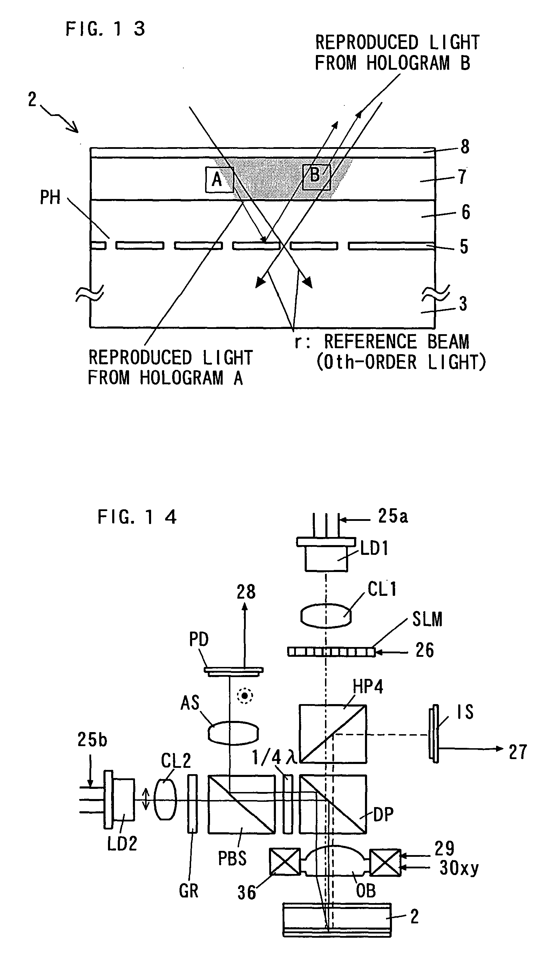

As shown in Fig. 13, even in the case of reproducing the hologram, the reference light for reproduction is matched with the pinhole. By doing such an operation, the reference light passes through a rear side of the holographic record carrier 2 via the pinhole PH. Since the reference light is not returned to the objective lens OB, the reference light is never returned and incident to the image detection sensor IS. In a reproduction of the recorded hologram, the reproduced signal B is generated to the objective lens OB side in the hologram B by the reference light incident to the holographic record carrier 2. Further, the reproduced signal A is generated to the opposite side of the objective lens OB in the hologram A. The generated signal A is reflected from the reflective function layer 5 and returned to the objective lens OB side. The reproduced signals A and B are identical and overlapped on the light-receiving element so that no problem occurs.

### <Holographic device of another embodiment>

Fig. 14 explains an example where recording of a hologram is performed without dividing the reference light and signal light, and a laser light source of different wavelength is used to control a relationship (focusing, tracking) of a holographic record carrier and a pickup, when recording and reproducing the hologram.

The holographic device shown in Fig. 14 omits first, second and third half mirror prisms HP1, HP2 and HP3 of the record optical system, arranges a first laser light source LD1 and a first collimator lens CL1 in the position of an image detection sensor IS, and arranges the image detection sensor IS in the position of the second half mirror prism HP2. Further, by inserting a transparent polarizing spatial light modulator SLM between the fourth half mirror prismHP4 and a first collimator lens CL1 instead of a reflective spatial light modulator, a reproduced wave returned from the carrier by inserting the objective lens OB is branched by the fourth half mirror prism HP4. The configuration is identical to that of Fig. 6 except the configuration described above. The laser light from a first laser light source LD1 is converted into a parallel beam by the collimator lens CL1 and is then incident onto the transparent polarizing spatial light modulator SLM. The polarizing spatial light modulator SLM has a movement to spatially modulate a part of the incident light to a liquid crystal panel having an electrode divided in a matrix shape or the like electrically. Using the polarizing spatial light modulator SLM, page data is modulated as an intensity distribution among the signal light. The beam out of the polarizing spatial light modulator SLM becomes a first light beam FB consisted of a diffraction light (signal light component) of 1 or greater order and non-modulated Zero-order light (reference light component). The first light beam FB of the signal light and reference light is focused on the holographic record carrier 2 50 that the hologram is recorded. That is, the hologram reproduction system has a support unit for maintaining a holographic record carrier to be mounted other than a principal part of the record optical system, a light source for generating a coherent reference light, an interference unit for irradiating the reference light on a diffraction grating formed in an internal part of a recording layer of the holographic record carrier according to record information and reproducing a reproduction wave, a dividing unit for dividing a return light reflected from the reflective function layer of the reference light and returned to the interference unit and a reproduction wave, and a detector for detecting the record information imaged by the reproduction wave.

In the reproduction operation, a first light beam consisting ofnon-modulatedlaserlight, that is, Zero-orderlight (reference light component) in the transparent polarizing spatial light modulator SLM is condensed on the holographic record carrier 2 through the objective lens OB, the reproducedwave is reconstructed and returned to a pickup through the objective lens OB. The component reflected from the fourth half mirror prism HP4 is incident on the image detection sensor IS. The image detection sensor IS transfers an output corresponding to an image generated using the reproduced light to the reproduction signal detection processing circuit 27, provides the controller circuit 50 with the reproduction signal generated there and reproduces page data that has been recorded.

The construction (boring and servo control) of the servo beam SB is the same as that shown in Fig. 6.

### <Example 1>

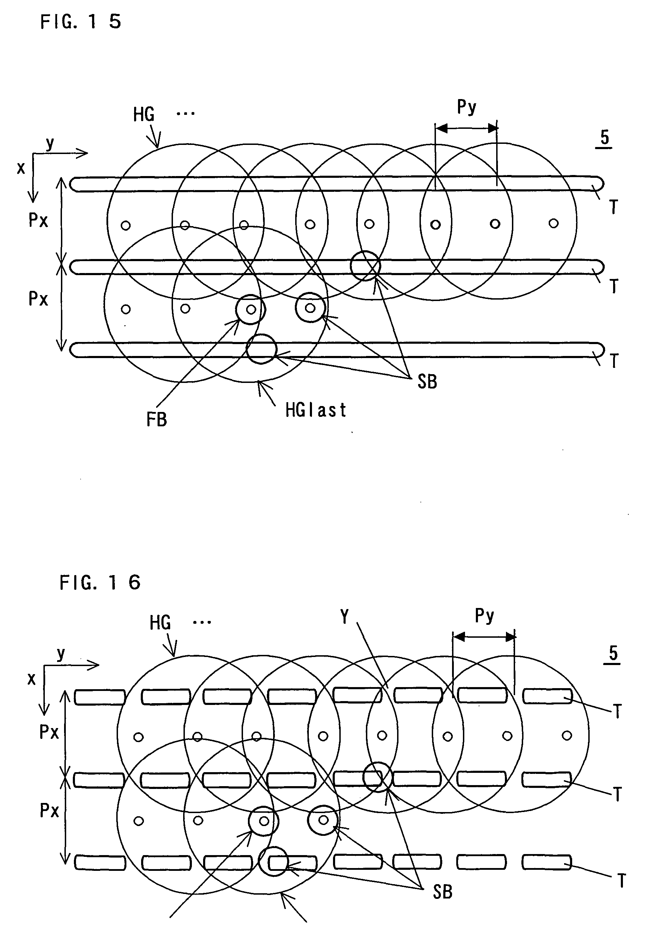

As shown in Fig. 15, the reflective function layer 5 of Example 1 has the tracks for which hologram multiplex intervals Px in the x-direction are set and which extends in the y-direction as a hologram multiplex direction in the form of a disc format. Note that, the servo control for the positioning with the holographic record carrier 2 is constantly performed by using the servo beam SB, and at the same time, the hologram recording is performed by using the first light beam FB.

As shown in the figure, at the time of recording, the spot of the servo beam SB which is condensed on the reflective function layer 5 of the holographic record carrier 2 is arranged forward of the spot of the first light beam FB in the y-direction as the recording direction of the holographic record carrier 2. The intervals in this arrangement between the first light beam FB and the servo beam SB are set to a hologram multiplex interval Py in the y-direction. The servo beam SB is divided into three beams by the grating. The sub beams are disposed on the tracks T, so that the main beam at the center of the servo beam SB is disposed between the tracks T. The tracking servo control for causing the objective lens OB to follow the tracks T is performed based on a detection signal of the side beam by using the push-pull method or the like. The servo beam SB is set to an optical output with which the pinhole PH can be bored in the reflective function layer 5, and the pinhole PH is then bored. After that, the holographic record carrier 2 is moved in the y-direction by the interval Py to make the spot of the first light beam FB to agree with the pinhole PH. Thereafter, the hologram is recorded by using the first light beam FB. Since the first light beam FB and the spot of the servo beam SB are arranged apart from each other in advance by the interval Py, even if the holographic record carrier 2 is not moved during the recording of a hologram, the pinhole PH can be bored in a position in advance where the next hologram is to be recorded.

### <Example 2>

As shown in Fig. 16, Example 2 has the tracks T for which the hologram multiplex intervals Px in the x-direction are set and which extend in the y-direction as the hologram multiplex direction, and a mark Y agreeing with the multiplex intervals Py in the y-direction as a disc format.

As shown in the figure, at the time of recording, the spot of the servo beam SB is disposed forward of the spot of the first light beam FB in the y-direction as the recording direction of the holographic record carrier 2. The intervals in this arrangement of these spots are set to the hologram multiplex interval Py in the y-direction in the same manner as that in Example 1. For the servo beam SB, in addition to the tracking servo control similar to that in Example 1, time-base servo control for causing the objective lens OB to follow in the y-direction as well by utilizing the mark Y in the y-direction is simultaneously performed. The boring of the pinhole PH by the servo beam SB is similar to that in Example 1.

### <Example 3>

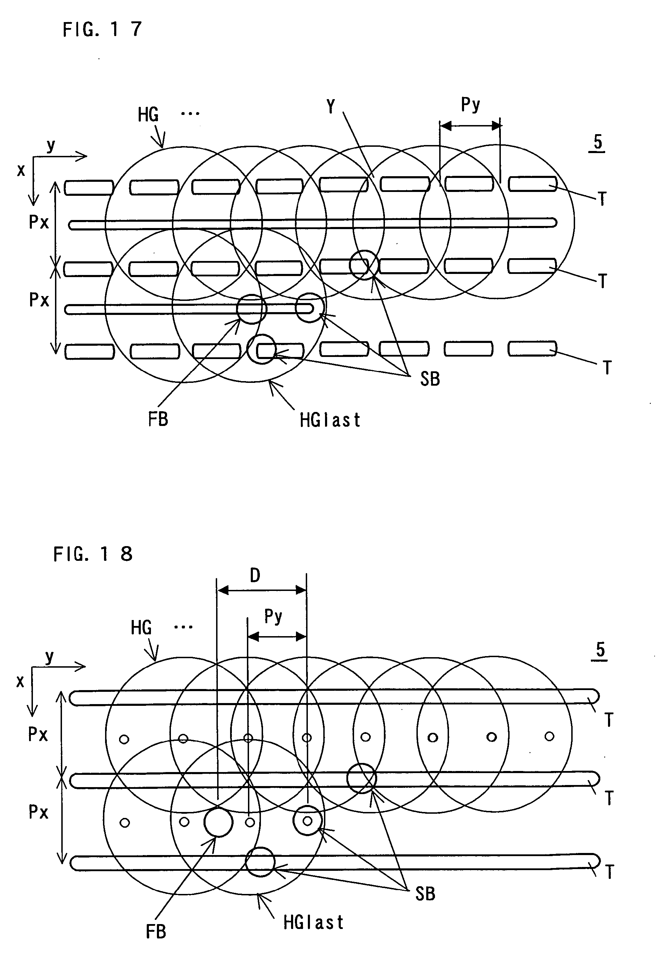

As shown in Fig. 17, the disc format is similar to that in Example 2.

As shown in the figure, the spot of the servo beam SB is arranged forward of the spot of the first light beam FB in the y-direction as the recording direction of the holographic record carrier 2. The intervals in this arrangement of these spots are set to the hologram multiplex interval Py in the y-direction in the same manner as that in Example 1. For the servo beam SB, in addition to the tracking servo control similar to that in Examples 1 and 2, the time-base servo control for causing the objective lens OB to follow in the y-direction as well by utilizing the mark Y in the y-direction is simultaneously performed. In Example 3, the servo beam SB is set at an optical output where light-transmissive grooves can be bored in the reflective function layer 5 formed on the tracks, and the light-transmissive grooves are continuously bored. After that, the holographic record carrier 2 is moved in the y-direction by the interval Py, and the positioning in the y-direction is performed by utilizing the sub beams, thereby causing the spot of the first light beam FB to agree with the pinhole PH. Thereafter, the hologram is recorded by using the first light beam FB.

### <Example 4>

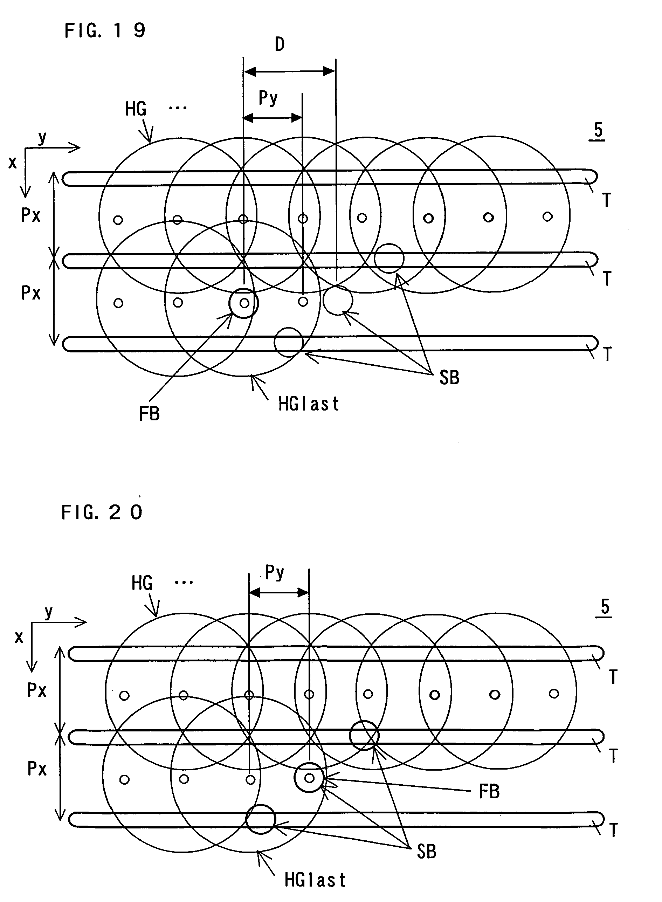

As shown in Figs. 18 and 19, the disc format is similar to that in Example 1.

As shown in these figures, the interval D between the spots on the refection functioning layer 5 of the first light beam FB and the servo beam SB is not necessarily identical to the hologram multiplex interval Py in the y-direction. In such a case, the same effects can be obtained by causing deviation in timing between the boring of the pinhole PH and the hologram recording. In the case of Figs. 18 and 19, if the irradiation timing of the first light beam FB is delayed exceeding the period of time required to move the hologram multiplex interval Py after the pinhole PH is bored by using the servo beam SB, the first light beam FB can be made to agree with the target pinhole PH.

### <Example 5>

As shown in Fig. 20, the disc format is similar to that in Example 1.

At the time of recording, the spot of the servo beam SB condensed on the reflective function layer 5 of the holographic record carrier 2 and the spot of the first light beam FB are arranged such that the spot of the servo beam SB agree with the spot of the first light beam FB and so as to have the common axis. The intermittent movement of the first light beam FB and the servo beam SB is set at the hologram multiplex interval Py in the y-direction. That is to say, there is no problem even if the two beams perfectly agree with each other. In this case, the hologram recording is performed without moving the holographic record carrier 2 in the multiplex direction after completion of the boring of the pinhole PH, and the intermittent movement is carried out. Alternatively, the boring of the pinholes PH by using the servo beam SB is performed for, for example, one round, and thereafter the hologram recording needs to be carried out by thus causing deviation in timing.

As set forth hereinabove, according to this embodiment, since reference light is always prevented from turning back from the non-reflective regions such as the pinholes PH of the reflective function layer, diffracted light from the reconstructed hologram can be separated from the reference light. Since only reference light at the time of hologram recording can be effectively made not to be reflected by using the servo beam, an excessive hologram such as a reflected image is not recorded. As a result, the holographic recording layer is prevented from being overly deteriorated. In addition, since reference light does not return back to the detector side at the time of reconstruction, it is possible to receive only the diffracted light necessary for the signal reproduction from the hologram. As a result, reproduction SN is improved and enables stable reproduction. Moreover, since a non-reflective region can be formed based on the intervals of the tracks which are formatted in the reflective function layer in advance by using the servo beam, the non-reflective region functions as precise marks necessary for the hologram multiplex intervals. The intervals of the pinholes PH may be made to agree with the shortest intervals (corresponding to the maximum multiplicity state) in the hologram recording, and the interval between adjacent holograms may be made an integral multiple of the interval of the pinholes.

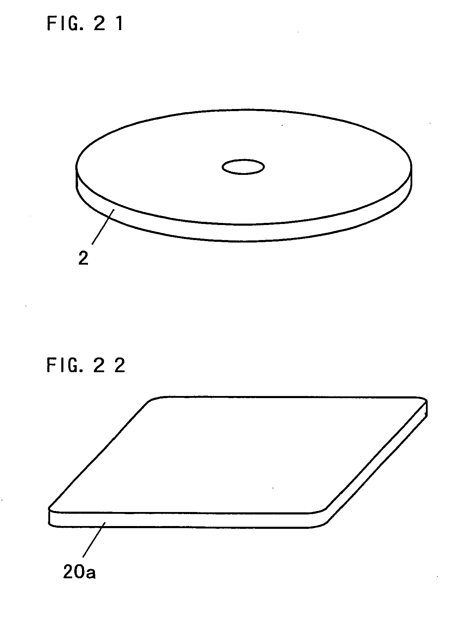

In addition, in the above-mentioned embodiment, the description has been given by showing the holographic record carrier disc 2 as shown in Fig. 21 as an example of a recording medium. However, the holographic record carrier may also be an optical card 20a of a rectangular plane parallel plate made of, for example, plastic or the like as shown in Fig. 22 in addition to a disc-like shape. Even in such an optical card, the tracks, for example, may be formed in spiral shape, in spiral arc shape or in concentric shape on a substrate with respect to the center of gravity, or the tracks may also be formed in parallel to one another on the substrate.

As can be seen from the above description, the non-reflective region must appear and function only for the light (the first light beam in this case) used in the hologram recording. In other words, in the case where the first light beam and the second light beam are different from each other in wavelength, any change which is different from that in the first light beam, for example, even an increase in reflectivity may occur in the wavelength of the second light beam, or no change may occur therein at all.

Furthermore, in the above-mentioned embodiment, the description has been given with respect to the case where the recording of the hologram, the recording of the mark and the servo control for the light beam are carried out by using the first light beam FB and the servo beam SB (second light beam) which are emitted from the first and second laser sources LD1 and LD2, respectively, and which are different in wavelength from each other. However, laser sources which emit laser beams having the same wavelength may be used as the first and second laser sources D1 and D2, respectively. In this case, for example, the first beam FB is emitted only for the time zone for the hologram recording while the servo control is performed with the light intensity of the servo beam SB being suppressed to a level not enough to perform the hologram recording, or the light intensity of the servo beam SB is increased to a predetermined level, whereby it is possible to attain the recording in the holographic recording layer, and also the control for the formation of a non-reflective region in the reflective function layer.

## Claims

1. A holographic record carrier in or from which information is recorded or reproduced by irradiation of light, **characterized by** comprising:
a holographic recording layer for storing a light interference pattern based on components of coherent reference light and signal light as a diffraction grating in the inside thereof; and
a reflective function layer laminated on a side opposite to a light incidence side of said holographic recording layer, said reflective function layer being sensitive to the intensity of irradiated light so that a non-reflective region appears in an irradiated portion thereof.

2. The holographic record carrier according to claim 1, wherein said non-reflective region of said reflective function layer has a transmittance as a characteristic value higher than that at the time of non-irradiation of light.

3. The holographic record carrier according to claim 1, wherein said non-reflective region of said reflective function layer is a pinhole.

4. The holographic record carrier according to claim 1, wherein said non-reflective region of said reflective function layer has an absorption factor as a characteristic value higher than that at the time of non-irradiation of light.

5. The holographic record carrier according to claim 1, wherein said non-reflective region of said reflective function layer has a reflectivity as a characteristic value lower than that at the time of non-irradiation of light.

6. The holographic record carrier according to any one of claims 1 to 5, wherein said reflective function layer has tracks extending apart from one another without crossing with one another for causing spots of light beams to be focused after passing through said holographic recording layer and said reflective function layer from an objective lens to follow said tracks.

7. The holographic record carrier according to any one of claims 1 to 6, wherein said tracks are formed in spiral shape, in spiral arc shape or in concentric shape.

8. The holographic record carrier according to any one of claims 1 to 7, wherein said tracks are formed in parallel to one another.

9. The holographic record carrier according to any one of claims 1 to 8, wherein said light interference pattern is formed by a first light beam to record a hologram, and said reflective function layer is sensitive to a second light beam to form said non-reflective region.

10. The holographic record carrier according to claim 9, wherein said holographic recording layer has a sensitivity to a wavelength of said first light beam higher than that to a wavelength of said second light beam, and said reflective function layer is made of a phase-change film or pigment film in which its sensitivity to the wavelength of said second light beam is set to be higher than that to the wavelength of said first light beam.

11. The holographic record carrier according to claim 9 or 10, wherein appearance of said non-reflective region is based on the wavelength of said first light beam.

12. A hologram apparatus for recording therein information as a diffraction grating, **characterized by** comprising:
a supporting portion for detachably holding a holographic record carrier comprising a holographic recording layer for storing a light interference pattern based on components of coherent reference light and signal light as a diffraction grating in the inside thereof, and a reflective function layer laminated on a side opposite to the light incidence side of said holographic recording layer, said reflective function layer being sensitive to the intensity of irradiated light so that a non-reflective region appears in an irradiated portion thereof;
an interference portion comprising an objective lens for irradiating a light beam to said holographic recording layer such that the light beam passes through said reflective function layer from said holographic recording layer, thereby forming a diffraction grating based on a light interference pattern in a portion in said holographic recording layer in which components of reference light and signal light of the light beam interfere with each other; and
a non-reflective region forming portion for, before formation of the light interference pattern, condensing the light beam on said reflective function layer through said objective lens in advance to form said non-reflective region in said reflective function layer.

13. The hologram apparatus according to claim 12, wherein said interference portion comprises first and second light sources, the light interference pattern is generated by using a light beam from said first light source to record a hologram, and said reflective function layer is sensitive to a light beam from said second light source to form said non-reflective region.

14. The hologram apparatus according to claim 13, wherein recording of the hologram is performed on said non-reflective region.

15. The hologram apparatus according to claim 13 or 14, wherein irradiation is made such that an irradiation point of the light beam from said second light source on said reflective function layer is formed forward of an irradiation point of the light beam from said first light source on said reflective function layer in the same movement direction.

16. The hologram apparatus according to claim 13 or 14, wherein an irradiation point of the light beam from said second light source on said reflective function layer is formed backward of or so as to agree with an irradiation point of the light beam from said first light source on said reflective function layer in the same movement direction, and in this state, the irradiation of the light beam from said second light source is performed after the irradiation of the light beam from said first light source in the time sequence.

17. The hologram apparatus according to any one of claim 13 to 16, wherein said interference portion has an optical system comprising a spatial light modulator for spatially modulating the light beam, from said first light source, as reference light according to the recorded information, thereby generating signal light, and merging the reference light and the signal light so that their optical axes approximately agree with each other.

18. The hologram apparatus according to any one of claim 13 to 17, wherein said non-reflective region forming portion has a servo control portion for performing servo control for causing a light beam from said second light source to follow the motion of said holographic record carrier by condensing the light beam from said second light source on said reflective function layer to detect its return light.

19. The hologram apparatus according to any one of claim 13 to 18, wherein an interval between a pair of non-reflective regions adjacent to each other is a minimum interval between the holograms adjacent to each other.

20. A hologram recording method of recording information in a holographic record carrier comprising a holographic recording layer for storing a light interference pattern based on components of coherent reference light and signal light as a diffraction grating in the inside thereof, and a reflective function layer laminated on a side opposite to the light incidence side of said holographic recording layer, said reflective function layer being sensitive to the intensity of irradiated light so that a non-reflective region appears in an irradiated portion thereof, said hologram recording method **characterized by** comprising:
an interference step of forming a diffraction grating based on a light interference pattern in a portion of the holographic recording layer where components of reference light and signal light of the light beam interfere with each other, by irradiating a light beam to the holographic recording layer so that the light beam passes from the holographic recording layer through the reflective function layer; and
a step of forming the non-reflective region in the reflective function layer, before the interference step, by condensing the light beam on the reflective function layer through the objective lens in advance.

21. The hologram recording method according to claim 20, wherein the light beam is first and second light beams which are irradiated on saidholographic record carrier so that their optical axes approximately agree with each other, the light interference pattern is generated by the first light beam to record the hologram, and said reflective function layer is sensitive to the intensity of the second light beam to form said non-reflective region.

22. The hologram recording method according to claim 21, wherein recording of the hologram is performed on said non-reflective region.

23. The hologram recording method according to claim 21 or 22, wherein irradiation is made such that an irradiation point of the second light beam on said reflective function layer is formed in front of an irradiation point of the first light beam on said reflective function layer in the same movement direction.

24. The hologram recording method according to claim 21 or 22, wherein an irradiation point of the second light beam on said reflective function layer is formed in a rear of or so as to agree with an irradiation point of the first light beam on said reflective function layer in the same movement direction, and in this state, the irradiation of the second light beam is performed after the irradiation of the first light beam in the time sequence.

25. The hologram recording method according to any one of claims 21 to 24, wherein signal light is generated by a spatial light modulator for spatially modulating reference light from a first light source according to recorded information, and the reference light and the signal light are merged so that their optical axes approximately agree with each other, thereby generating the first light beam.

26. The hologram recording method according to any one of claims 21 to 25, wherein there is performed servo control for causing a light beam from said second light source to follow the motion of said holographic record carrier by condensing the light beam from said second light source on said reflective function layer to detect its return light.

27. The hologram recording method according to any one of claims 21 to 26, wherein the interval between a pair of non-reflective regions adjacent to each other is a minimum interval between the holograms adjacent to each other.
